# EUROPEAN PATENT SPECIFICATION

(11) **EP 4 411 905 B1**
(45) Date of publication and mention of the grant of the patent: **05.08.2026**
(21) Application number: 22896178.5
(22) Date of filing: 22.11.2022
(51) Int. Cl.: H01M 10/04, H01M 50/30, H01M 50/105, H01M 10/52, B29C 67/00, H01M 10/44

(54) **DEGASSING DEVICE**
ENTGASUNGSVORRICHTUNG
DISPOSITIF DE DÉGAZAGE

(30) Priority: 22.11.2021 KR 20210161767
(43) Date of publication of application: 07.08.2024
(73) Proprietor: LG Energy Solution, Ltd., Seoul 07335 (KR)
(72) Inventor: KWON, Gi Hwan, Daejeon 34122 (KR)
(74) Representative: Plasseraud IP
(86) International application number: PCT/KR2022/018534
(87) International publication number: WO 2023/090981

(56) References cited:
- KR-A- 20120 060 707
- KR-A- 20120 060 707
- KR-A- 20170 087 250
- KR-A- 20170 104 205
- KR-A- 20170 104 205
- KR-A- 20200 106 380
- KR-A- 20210 072 316
- KR-A- 20210 136 482
- KR-A- 20230 057 957
- KR-B1- 102 269 614
- US-A1- 2020 185 675

## Description

### TECHNICAL FIELD

The present application claims the benefit of the priority of Korean Patent Application No. 10-2021-0161767, filed on November 22, 2021.

The present invention relates to a degassing device, and more particularly, to a degassing device used in a degassing process of a pouch type secondary battery.

### BACKGROUND ART

In general, secondary batteries refer to batteries that are chargeable and dischargeable unlike non-rechargeable primary batteries. Such secondary batteries are widely used in the field of advanced electronic devices such as phones, notebook computers and camcorders.

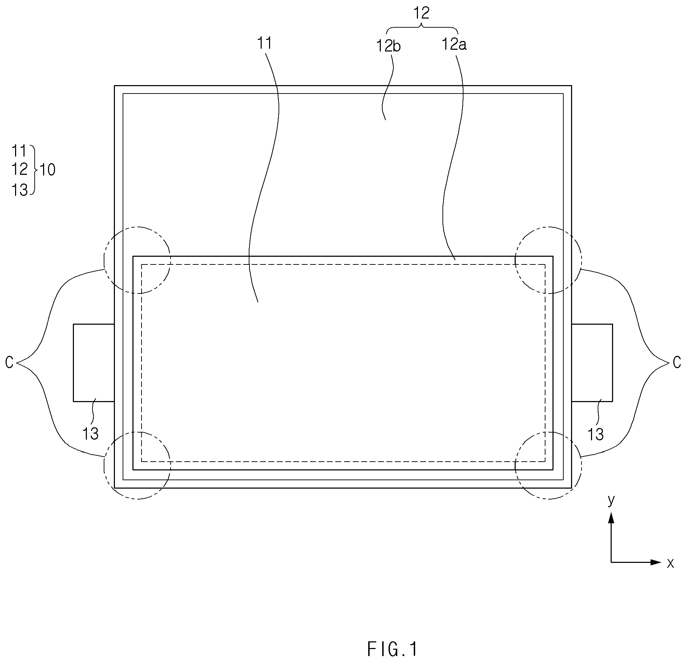

As illustrated in FIG. 1A, such secondary batteries each include an electrode assembly 11 in which an electrode and a separator are alternately stacked, a pouch 12 which accommodates the electrode assembly 11, and an electrode lead 13 which is electrically connected to the electrode assembly 11 and protrudes from the pouch 12.

A secondary battery manufacturing method includes an electrode manufacturing process of manufacturing an electrode, an electrode assembly manufacturing process of stacking the electrode and a separator alternately to manufacture an electrode assembly 11, an electrode lead coupling process of coupling an electrode lead 13 to the electrode assembly 11, a pouch sealing process of accommodating the electrode assembly 11 in a pouch in a state, in which a front end of the electrode lead 13 is drawn out to the outside, and sealing an edge surface of the case to complete a secondary battery, an activating process of charging or discharging the secondary battery, and a degassing process of discharging gas generated in the pouch 12 during the charging-discharging of the secondary battery. In the degassing process, an accommodation part 12a that accommodates the electrode assembly 11 of the secondary battery is pressed to move the gas generated in the accommodation part 12a to a gas collecting part 12b, and a hole is defined in the gas collecting part 12b to discharge the gas moved to the gas collecting part 12b to the outside.

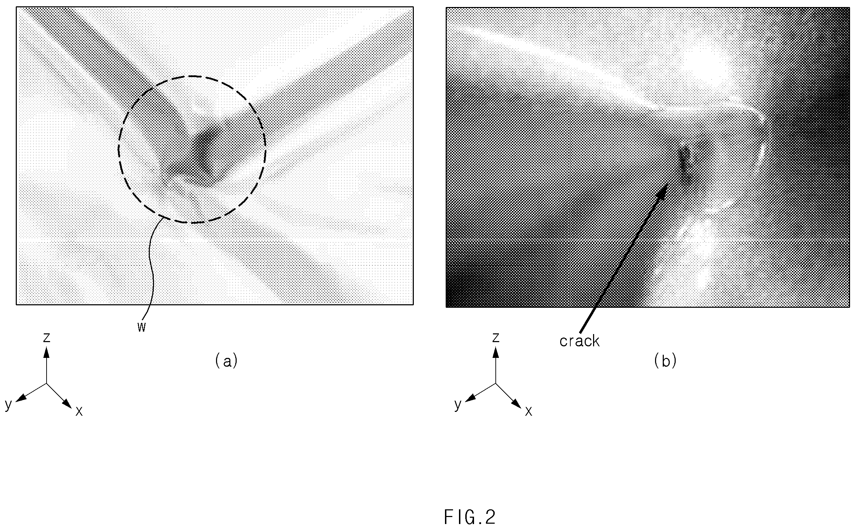

Meanwhile, there is a problem that an outer appearance of the pouch is deformed during the degassing process. In particular, a corner C at which stress concentrates is formed in the accommodation part 12a formed to accommodate the electrode assembly 11. The corner C is a portion which is prone to deformation and at which wrinkles W are concentrated (see FIG. 2a). The wrinkles W formed at the corner C form a sharp edge and are developed into a crack (see FIG. 2b). There are serious problems that such a crack causes an electrolyte to leak to the outside of the secondary battery or serves as a passage through which outside moisture is introduced into the secondary battery, thereby deteriorating secondary battery quality. Examples of the background art can be found in KR 2021 0072316 A, KR 2012 0060707 A and KR 2017 0104205 A. KR 2012 0060707 A discloses a degassing device according to the preamble of claim 1.

### DISCLOSURE OF THE INVENTION

### TECHNICAL PROBLEM

The present invention has been devised to solve the problems as above and an object of the present invention is to provide a degassing device that minimizes a damage of a pouch type secondary battery during a degassing process of the pouch type secondary battery.

### TECHNICAL SOLUTION

The present invention provides a degassing device for degassing of a pouch type secondary battery provided with an accommodation part in which an electrode assembly is accommodated. The degassing device is characterized by including: a pressing part that is provided to face one surface of the accommodation part and presses the accommodation part in a direction of the electrode assembly; and a fixing part that is provided to surround an edge of the accommodation part and applies negative pressure to a corner of the accommodation part to adsorb and fix the corner.

The fixing part may form a vacuum between a region provided to face the corner of the accommodation part and the accommodation part.

The fixing part may include a body part, which is disposed along the edge of the accommodation part, and an air passage part which is provided in at least one region of the body part and suctions air around the corner of the accommodation part.

In the body part, one surface facing the accommodation part may be formed stepped to correspond to a shape of the accommodation part.

The air passage part may include: an air suction part that is formed in a region provided to face the corner of the accommodation part and suctions the air around the corner of the accommodation part; and an air discharge part that is communicated with the air suction part to form an air passage and discharges the air introduced from the air suction part to the outside.

The air suction part may include a plurality of air suction holes.

Each of the air suction holes may have a diameter of 0.1 mm to 1 mm.

The degassing device according to the present invention may further include a pad part that is provided between the pouch type secondary battery and the fixing part and maintains airtightness between the pouch type secondary battery and the fixing part.

In the pad part, a through-hole passing through a top surface and a bottom surface of the pad part may be defined in a region provided to face the corner of the accommodation part.

A material of the pad part may include silicon.

The degassing device according to the present invention may be disposed at at least one of an upper side or a lower side of the pouch type secondary battery.

### ADVANTAGEOUS EFFECTS

The degassing device according to the present invention may prevent the formation of the wrinkles that occurs at the corner of the accommodation part, in which the electrode assembly is accommodated, during the degassing process of the pouch type secondary battery. Accordingly, there are the effects that the sharp edge and the crack may be prevented from occurring at the corner to minimize the deterioration of the secondary battery quality.

### BRIEF DESCRIPTION OF THE DRAWINGS

FIG. 1 is a front view illustrating a pouch type secondary battery when viewed from a front side.
FIGS. 2a and 2b are images showing a damaged state of an accommodation part corner of the pouch type secondary battery in FIG. 1.
FIG. 3 is a perspective view illustrating a degassing device according to an embodiment of the present invention.
FIG. 4 is a plan view illustrating the degassing device in FIG. 3 when viewed from an upper side.
FIG. 5 is a cross-sectional view illustrating a degassing device when viewed in a direction I-I in FIG. 4.
FIG. 6 is an enlarged cross-sectional view illustrating a portion A in FIG. 5.
FIG. 7 is a bottom view illustrating the degassing device in FIG. 3 when viewed from a bottom to an upper side.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention provides a degassing device 100 for degassing of a pouch type secondary battery 10 provided with an accommodation part 12a in which an electrode assembly 11 is accommodated.

The pouch type secondary battery 10 is a component, which is provided with the accommodation part 12a in which the electrode assembly 11 is accommodated, and may have various configurations. In more detail, a pouch 12 may include the accommodation part 12a, in which the electrode assembly 11 and an electrolyte are accommodated, and a gas collecting part 12b which extends from a circumferential direction of the accommodation part 12a and collects gas generated from the electrode assembly 11.

Here, as the accommodation part 12a is formed so that the electrode assembly 11 is accommodated therein as described above, a corner C may be formed at a position of a corner of the electrode assembly 11. Here, the corner C may include a surface formed parallel to each of X, Y, and Z directions based on the drawings.

The pouch type secondary battery 10 may be disposed inside a chamber having an inner space, in which negative pressure is formed to easily discharge the gas, and may be pressed by a pressing part 110 to be described later so as to discharge the gas generated during an activating process.

A degassing process is performed on such a pouch type secondary battery 10 by the degassing device 100 according to the present invention, and the degassing device 100 may have various configurations.

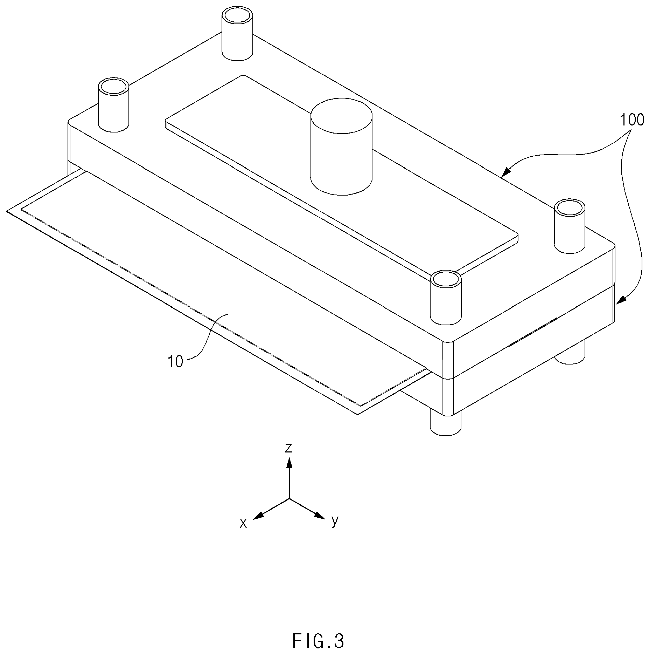

Here, the degassing device 100 may be disposed at at least one of an upper side or a lower side of the pouch 12. For example, the degassing device 100 may be disposed only at the upper side of the pouch type secondary battery 10, may be disposed only at the lower side of the pouch type secondary battery 10, or may be disposed at each of the upper side and the lower side of the pouch type secondary battery 10 as illustrated in FIG. 3.

In more detail, the degassing device 100 includes the pressing part 110, which is provided to face one surface of the accommodation part 12a and presses the accommodation part 12a in a direction of the electrode assembly 11, and a fixing part 120 which is provided to surround an edge of the accommodation part 12a and applies negative pressure to the corner C of the accommodation part 12a to adsorb and fix the corner.

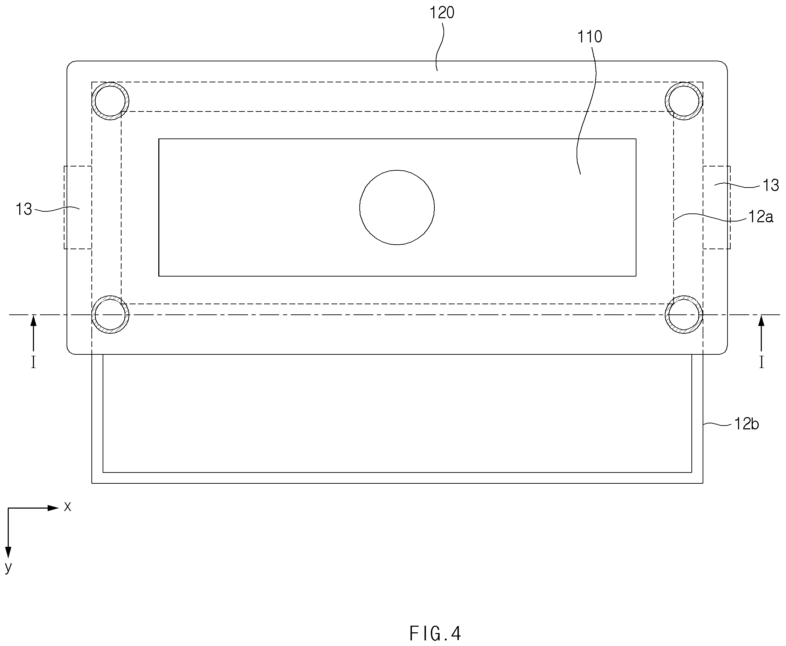

Here, the pressing part 110 is a component, which is provided to face the one surface of the accommodation part 12a and presses the accommodation part 12a in the direction of the electrode assembly 11 as illustrated in FIG. 4, and may have various configurations. Here, portions shown by dotted lines in FIG. 4 may be understood as the accommodation part 12a and an electrode lead 13, respectively, which are disposed at the lower side of the degassing device 100.

In more detail, the pressing part 110 may press the one surface of the accommodation part 12a while moving in the direction of the electrode assembly 11, so as to discharge the gas remaining in the electrode assembly 11 into the gas collecting part 12b. Accordingly, the gas remaining inside the electrode assembly 11 may be forcibly discharged in a direction of the gas collecting part 12b.

The pressing part 110 may press the accommodation part 12a in various methods. For example, the pressing part 110 may be provided as a press to press the one surface of the accommodation part 12a by moving vertically toward the one surface of the accommodation part 12a.

As described above, the degassing device 100 according to an embodiment of the present invention additionally includes the fixing part 120 capable of preventing deformation of the corner C of the accommodation part 12a and an additional damage caused by the deformation of the corner C during the degassing process.

Specifically, the fixing part 120 is a component, which is provided to surround the edge of the accommodation part 12a and applies the negative pressure to the corner C of the accommodation part 12a to adsorb and fix the corner C, and may have various configurations.

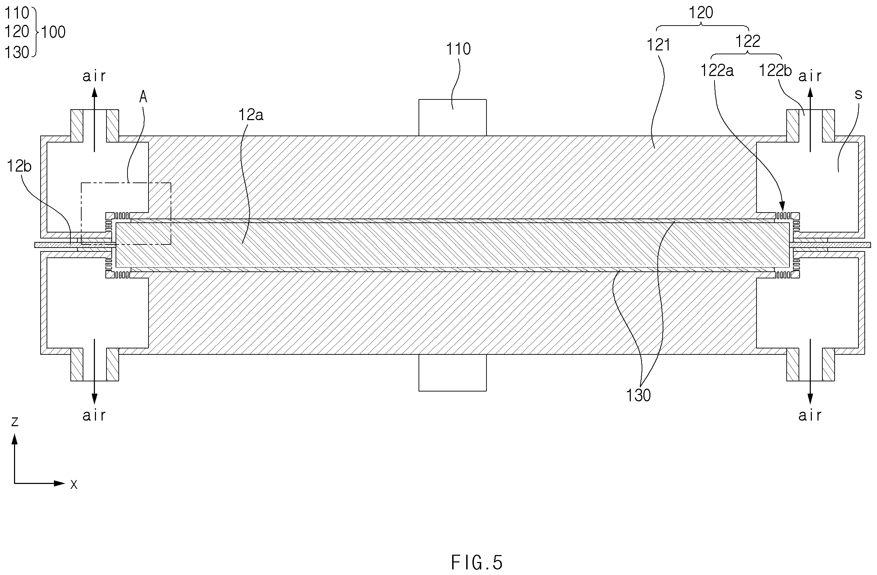

More specifically, as illustrated in FIG. 5, the fixing part 120 may be provided to surround the edge of the accommodation part 12a, and apply the negative pressure to a region corresponding to the corner C of the accommodation part 12a so that the corner C of the accommodation part 12a is adsorbed and fixed to the fixing part 120.

Here, the negative pressure formed by the fixing part 120 is pressure lower than atmospheric pressure, and when the pouch type secondary battery 10 is disposed inside the chamber in which the negative pressure is formed as described above, the negative pressure may be pressure lower than pressure formed by the chamber. For example, the fixing part 120 may form a vacuum state with low pressure of 1/1000 mmhg or less in the region corresponding to the corner C of the accommodation part 12a.

Such a fixing part 120 may have various structures. For example, the fixing part 120 may include a body part 121, which is disposed along the edge of the accommodation part 12a, and an air passage part 122 which is provided in at least one region of the body part 121 and suctions air around the corner C of the accommodation part 12a.

Here, the body part 121 is a component, which is disposed along the edge of the accommodation part 12a, and may have various configurations.

Specifically, the body part 121 may have various shapes. For example, the body part 121 may have a shape surrounding a circumference of the pressing part 110 as illustrated in FIG. 4, so as to more effectively maintain airtightness between the pressing part 110 and the fixing part 120. Here, an insertion hole (not shown) into which the pressing part 110 is insertable may be defined in a center of the body part 121.

In the body part 121, one surface provided to face the accommodation part 12a may have a shape stepped to correspond to a shape of the accommodation part 12a as illustrated in FIG. 5, so that an air suction part 122a to be described later may be formed in a region facing each of surfaces forming the corner C of the accommodation part 12a. In other words, the body part 121 may be concavely recessed at a corresponding position of the accommodation part 12a so as to surround the accommodation part 12a in the circumferential direction.

An air flow space S, which is an empty space which is communicated with each of the air suction part 122a and an air discharge part 122b to be described later and in which air is flowable, may be formed in the body part 121.

Such an air flow spaces S may be provided in various numbers inside the body part 121. For example, the number of the air flow space S provided may correspond to the number of the corner C of the accommodation part 12a.

The air flow space S may be formed at any position at which the air flow space S is communicable with each of the air suction part 122a and the air discharge part 122b. For example, the air flow space S may be formed at a position corresponding to the corner C of the accommodation part 12a.

The air passage part 122 is a component, which is provided in the at least one region of the body part 121 and suctions the air around the corner C of the accommodation part 12a, and may have various configurations.

For example, the air passage part 122 may include the air suction part 122a, which is formed in a region provided to face the corner C of the accommodation part 12a and suctions the air around the corner C of the accommodation part 12a, and the air discharge part 122b which is communicated with the air suction part 122a to form an air passage and discharges the air introduced from the air suction part 122a to the outside.

Here, the air suction part 122a is a component, which is formed in the region provided to face the corner C of the accommodation part 12a and suctions the air around the corner C of the accommodation part 12a, and may have various configurations.

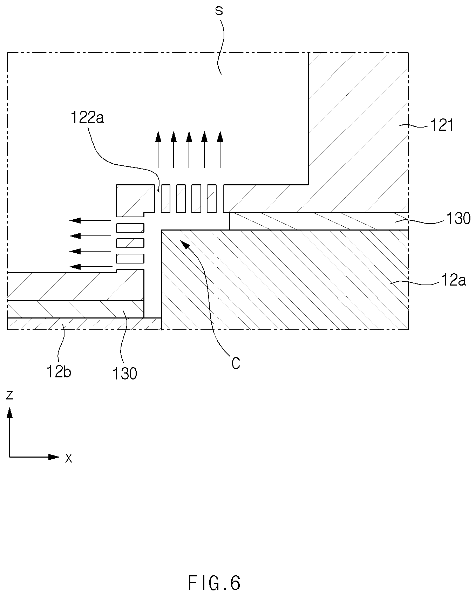

Specifically, the air suction part 122a may include at least one air suction hole and suction the air around the corner C of the accommodation part 12a into the air flow space S as illustrated in FIG. 6.

Here, the air suction hole may be provided in various numbers and have various sizes. For example, the air suction hole may be provided as a plurality of fine holes. Here, the air suction hole may have a diameter of 0.1 mm to 1 mm, and the diameter may be, for example, 0.5 mm.

The air suction part 122a may have a shape corresponding to the corner C of the accommodation part 12a so as to more effectively suction the air around the corner C of the accommodation part 12a. Here, when the air suction part 122a is provided as the plurality of fine holes, the plurality of fine holes may be disposed to face each of the surfaces forming the corner C of the accommodation part 12a.

The air discharge part 122b is a component, which is communicated with the air suction part 122a to form the air passage and discharges the air introduced from the air suction part 122a to the outside, and may have various configurations.

For example, the air discharge part 122b may include a valve through which an external device and the air suction part 122a that form the negative pressure are communicated with each other and which controls air flow. Here, the valve may control an air discharge amount, an air discharge speed, and so on. The external device may be provided as a vacuum pump.

The air discharge part 122b may be provided at various positions and in various numbers. For example, the air discharge part 122b may be formed at any position, at which the air discharge part 122b is communicable with the air flow space S described above, and may be provided to correspond the number of the air flow space S.

The degassing device 100 according to the present invention may further include a pad part 130 that maintains the airtightness between the pouch type secondary battery 10 and the fixing part 120.

In more detail, the pad part 130 may be provided between the pouch type secondary battery 10 and the fixing part 120 and maintain the airtightness so that the air is prevented from being introduced between the pouch type secondary battery 10 and the fixing part 120.

Here, the pad part 130 may have various shapes. For example, the pad part 130 may have a shape of a plate that covers one surface of the degassing device 100.

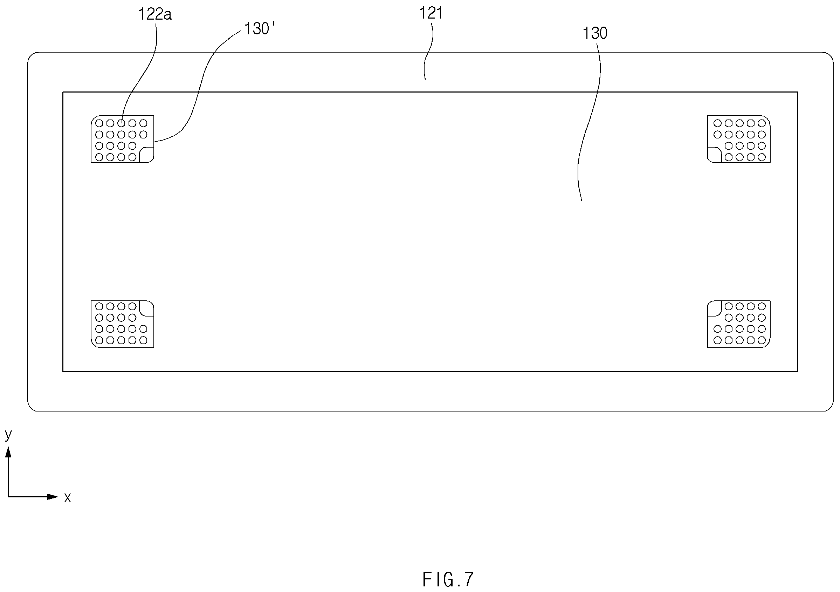

In the pad part 130, as illustrated in FIG. 7, a through-hole 130' passing through a top surface and a bottom surface of the pad part 130 may be defined in a region, which is provided to face the corner C of the accommodation part 12a, so as not to interfere with the air suction part 122a described above.

Such a pad part 130 may have any material as long as the material is capable of maintaining the airtightness between the pouch type secondary battery 10 and the fixing part 120. For example, the material of the pad part 130 may include a synthetic resin such as silicon, urethane or rubber.

### [Description of the Symbols]

10: Pouch type secondary battery
11: Electrode assembly
12: Pouch
12a: Accommodation part
12b: Gas collecting part
13: Electrode lead
100: Degassing device
110: Pressing part
120: Fixing part
121: Body part
122: Air passage part
122a: Air suction part
122b: Air discharge part
130: Pad part
C: Corner
S: Air flow space

## Claims

1. A degassing device (100) for degassing of a pouch type secondary battery (10) provided with an accommodation part (12a) in which an electrode assembly (11) is accommodated, the degassing device (100) comprising:
a pressing part (110) provided to face one surface of the accommodation part (12a) and configured to press the accommodation part (12a) in a direction of the electrode assembly (11); and
a fixing part (120) provided to surround an edge of the accommodation part (12a), **characterized in that** the fixing part (120) is configured to apply negative pressure to a corner (C) of the accommodation part (12a) and adsorb and fix the corner (C).

2. The degassing device (100) of claim 1, wherein the fixing part (120) forms a vacuum between a region provided to face the corner (C) of the accommodation part (12a) and the accommodation part (12a).

3. The degassing device (100) of claim 1, wherein the fixing part (120) comprises:
a body part (121) disposed along the edge of the accommodation part (12a); and
an air passage part (122) provided in at least one region of the body part (121) and configured to suction air around the corner (C) of the accommodation part (12a).

4. The degassing device (100) of claim 3, wherein, in the body part (121), one surface (12a) facing the accommodation part (12a) is formed stepped to correspond to a shape of the accommodation part (12a).

5. The degassing device (100) of claim 3, wherein the air passage part (122) comprises:
an air suction part (122a) formed in a region provided to face the corner (C) of the accommodation part (12a) and configured to suction the air around the corner (C) of the accommodation part (12a); and
an air discharge part (122b) communicated with the air suction part (122a) to form an air passage and configured to discharge the air introduced from the air suction part (122a) to the outside.

6. The degassing device (100) of claim 5, wherein the air suction part (122a) comprises a plurality of air suction holes.

7. The degassing device (100) of claim 6, wherein each of the air suction holes has a diameter of 0.1 mm to 1 mm.

8. The degassing device (100) of claim 1, further comprising a pad part (130) configured to be provided between the pouch type secondary battery (10) and the fixing part (120) and configured to maintain airtightness between the pouch type secondary battery (10) and the fixing part (120).

9. The degassing device (100) of claim 8, wherein, in the pad part (130), a through-hole (130') passing through a top surface and a bottom surface of the pad part (130) is defined in a region provided to face the corner (C) of the accommodation part (12a).

10. The degassing device (100) of claim 8, wherein a material of the pad part (130) comprises silicon.

11. The degassing device (100) of claim 1, wherein the degassing device (100) is configured to be disposed at at least one of an upper side or a lower side of the pouch type secondary battery (10).

## Patentansprüche

1. Entgasungsvorrichtung (100) zum Entgasen einer Sekundärbatterie vom Pouch-Typ (10), die mit einem Aufnahmeteil (12a) versehen ist, in dem eine Elektrodenanordnung (11) aufgenommen ist, wobei die Entgasungsvorrichtung (100) umfasst:
ein Pressteil (110), das so vorgesehen ist, dass es einer Oberfläche des Aufnahmeteils (12a) zugewandt ist, und so konfiguriert ist, dass es den Aufnahmeteil (12a) in eine Richtung der Elektrodenanordnung (11) presst; und
ein Befestigungsteil (120), das so vorgesehen ist, dass es einen Rand des Aufnahmeteils (12a) umgibt, **dadurch gekennzeichnet, dass** das Befestigungsteil (120) so konfiguriert ist, dass es einen Unterdruck auf eine Ecke (C) des Aufnahmeteils (12a) ausübt und die Ecke (C) adsorbiert und fixiert.

2. Entgasungsvorrichtung (100) nach Anspruch 1, wobei das Befestigungsteil (120) ein Vakuum zwischen einem Bereich, der so vorgesehen ist, dass er der Ecke (C) des Aufnahmeteils (12a) zugewandt ist, und dem Aufnahmeteil (12a) bildet.

3. Entgasungsvorrichtung (100) nach Anspruch 1, wobei das Befestigungsteil (120) umfasst:
ein Körperteil (121), das entlang des Randes des Aufnahmeteils (12a) angeordnet ist; und
ein Luftdurchgangsteil (122), das in mindestens einem Bereich des Körperteils (121) vorgesehen und so konfiguriert ist, dass es Luft um die Ecke (C) des Aufnahmeteils (12a) herum ansaugt.

4. Entgasungsvorrichtung (100) nach Anspruch 3, wobei im Körperteil (121) eine Oberfläche (12a), die dem Aufnahmeteil (12a) zugewandt ist, abgestuft ausgebildet ist, um einer Form des Aufnahmeteils (12a) zu entsprechen.

5. Entgasungsvorrichtung (100) nach Anspruch 3, wobei das Luftdurchgangsteil (122) umfasst:
ein Luftansaugteil (122a), das in einem Bereich ausgebildet ist, der so vorgesehen ist, dass er der Ecke (C) des Aufnahmeteils (12a) zugewandt ist, und so konfiguriert ist, dass es die Luft um die Ecke (C) des Aufnahmeteils (12a) herum ansaugt; und
ein Luftauslassteil (122b), das mit dem Luftansaugteil (122a) in Verbindung steht, um einen Luftdurchgang zu bilden, und so konfiguriert ist, dass es die vom Luftansaugteil (122a) eingeleitete Luft nach außen abführt.

6. Entgasungsvorrichtung (100) nach Anspruch 5, wobei das Luftansaugteil (122a) eine Vielzahl von Luftansauglöchern umfasst.

7. Entgasungsvorrichtung (100) nach Anspruch 6, wobei jedes der Luftansauglöcher einen Durchmesser von 0,1 mm bis 1 mm aufweist.

8. Entgasungsvorrichtung (100) nach Anspruch 1, ferner umfassend ein Pad-Teil (130), das so konfiguriert ist, dass es zwischen der Sekundärbatterie vom Pouch-Typ (10) und dem Befestigungsteil (120) vorgesehen ist, und so konfiguriert ist, dass es die Luftdichtheit zwischen der Sekundärbatterie vom Pouch-Typ (10) und dem Befestigungsteil (120) aufrechterhält.

9. Entgasungsvorrichtung (100) nach Anspruch 8, wobei in dem Pad-Teil (130) ein Durchgangsloch (130'), das durch eine obere Oberfläche und eine untere Oberfläche des Pad-Teils (130) verläuft, in einem Bereich definiert ist, der so vorgesehen ist, dass er der Ecke (C) des Aufnahmeteils (12a) zugewandt ist.

10. Entgasungsvorrichtung (100) nach Anspruch 8, wobei ein Material des Pad-Teils (130) Silizium umfasst.

11. Entgasungsvorrichtung (100) nach Anspruch 1, wobei die Entgasungsvorrichtung (100) so konfiguriert ist, dass sie an mindestens einer von einer Oberseite oder einer Unterseite der Sekundärbatterie vom Pouch-Typ (10) angeordnet ist.

## Revendications

1. Dispositif de dégazage (100) pour le dégazage d'une batterie secondaire de type poche (10) pourvue d'une partie de logement (12a) dans laquelle un assemblage d'électrodes (11) est logé, le dispositif de dégazage (100) comprenant :
une partie de pressage (110) prévue pour faire face à une surface de la partie de logement (12a) et configurée pour presser la partie de logement (12a) dans une direction de l'assemblage d'électrodes (11) ; et
une partie de fixation (120) prévue pour entourer un bord de la partie de logement (12a), **caractérisé en ce que** la partie de fixation (120) est configurée pour appliquer une pression négative à un coin (C) de la partie de logement (12a) et pour adsorber et fixer le coin (C).

2. Dispositif de dégazage (100) selon la revendication 1, dans lequel la partie de fixation (120) forme un vide entre une région prévue pour faire face au coin (C) de la partie de logement (12a) et la partie de logement (12a).

3. Dispositif de dégazage (100) selon la revendication 1, dans lequel la partie de fixation (120) comprend :
une partie de corps (121) disposée le long du bord de la partie de logement (12a) ; et
une partie de passage d'air (122) prévue dans au moins une région de la partie de corps (121) et configurée pour aspirer l'air autour du coin (C) de la partie de logement (12a).

4. Dispositif de dégazage (100) selon la revendication 3, dans lequel, dans la partie de corps (121), une surface (12a) faisant face à la partie de logement (12a) a une forme en marche pour correspondre à une forme de la partie de logement (12a).

5. Dispositif de dégazage (100) selon la revendication 3, dans lequel la partie de passage d'air (122) comprend :
une partie d'aspiration d'air (122a) formée dans une région prévue pour faire face au coin (C) de la partie de logement (12a) et configurée pour aspirer l'air autour du coin (C) de la partie de logement (12a) ; et
une partie d'évacuation d'air (122b) en communication avec la partie d'aspiration d'air (122a) pour former un passage d'air et configurée pour évacuer l'air introduit depuis la partie d'aspiration d'air (122a)vers l'extérieur.

6. Dispositif de dégazage (100) selon la revendication 5, dans lequel la partie d'aspiration d'air (122a) comprend une pluralité de trous d'aspiration d'air.

7. Dispositif de dégazage (100) selon la revendication 6, dans lequel chacun des trous d'aspiration d'air a un diamètre de 0,1 mm à 1 mm.

8. Dispositif de dégazage (100) selon la revendication 1, comprenant en outre une partie de tampon (130) configurée pour être disposée entre la batterie secondaire de type poche (10) et la partie de fixation (120) et configurée pour maintenir l'étanchéité à l'air entre la batterie secondaire de type poche (10) et la partie de fixation (120).

9. Dispositif de dégazage (100) selon la revendication 8, dans lequel, dans la partie de tampon (130), un trou traversant (130') passant à travers une surface supérieure et une surface inférieure de la partie de tampon (130) est défini dans une région prévue pour faire face au coin (C) de la partie de logement (12a).

10. Dispositif de dégazage (100) selon la revendication 8, dans lequel un matériau de la partie de tampon (130) comprend du silicone.

11. Dispositif de dégazage (100) selon la revendication 1, dans lequel le dispositif de dégazage (100) est configuré pour être disposé sur au moins l'un d'un côté supérieur ou d'un côté inférieur de la batterie secondaire de type poche (10).
